# FASCICULE DE BREVET EUROPEEN

(11) **EP 4 061 562 B1**
(45) Date de publication et mention de la délivrance du brevet: **19.07.2023**
(21) Numéro de dépôt: 20821328.0
(22) Date de dépôt: 17.11.2020
(51) Int. Cl.: B22F 3/105, B29C 64/357

(54) **MODULE DE FOURNITURE DE POUDRE DE FABRICATION ADDITIVE PERMETTANT LE REMPOTAGE DE POUDRE SOUS ATMOSPHERE INERTE**
ADDITIVES HERSTELLUNGSPULVERVERSORGUNGSMODUL, DAS DIE ZURÜCKSETZUNG DES PULVERS UNTER EINER INERTEN ATMOSPHÄRE IN EINEN BEHÄLTER ERMÖGLICHT
FEEDING MODULE FOR ADDITIVE MANUFACTURING POWDER ALLOWING THE POWER TO BE PLACED BACK INTO A CONTAINER UNDER INERT ATMOSPHERE

(30) Priorité: 18.11.2019 FR 1912853
(43) Date de publication de la demande: 28.09.2022
(73) Titulaire: AddUp, 63118 Cébazat (FR)
(72) Inventeur: EL OUAZZANI TAYIBI, Ali, 63118 CÉBAZAT (FR); ANGELE, Ludovic, 63118 CÉBAZAT (FR)
(74) Mandataire: Barascou, Frédéric
(86) Numéro de dépôt international: PCT/FR2020/052103
(87) Numéro de publication internationale: WO 2021/099732

(56) Documents cités:
- WO-A1-2017/194387
- WO-A1-2018/087087

## Description

### DOMAINE DE L'INVENTION

La présente invention concerne le domaine général des dispositifs de fabrication additive et plus particulièrement le domaine des modules de chargement de poudre sous atmosphère protectrice dans les dispositifs de fabrication additive.

### ETAT DE LA TECHNIQUE

La fabrication additive sélective consiste à réaliser des objets tridimensionnels par consolidation de zones sélectionnées sur des strates successives de matériau pulvérulent (poudre métallique, poudre de céramique, etc...).

Classiquement la poudre de fabrication additive est chargée dans le dispositif de fabrication additive sous atmosphère inerte et contrôlée notamment pour protéger l'opérateur d'une éventuelle inhalation ou d'une éventuelle explosion dans le cas d'une poudre réactive.

A cet effet, un dispositif de fabrication additive comprend habituellement un module de chargement de poudre avec une boite à gants. Des récipients ou des pots dans lesquels la poudre est conditionnée sont placés dans le boîtier puis ouverts manuellement par l'opérateur une fois qu'une atmosphère est réalisée à l'intérieur du boîtier.

Classiquement, un dispositif de fabrication additive comprend également un module de fourniture et stockage de la poudre connecté au module de chargement. La poudre est transférée du module de chargement vers le module de fourniture et stockage où elle est tamisée puis placée dans une trémie tampon en attente de son utilisation.

Le dispositif de fabrication additive comprend également un module de fabrication connecté au module de fourniture et stockage. La poudre est transférée de la trémie tampon vers le module de fabrication où elle est étalée en couche puis consolidée pour fabriquer un objet tridimensionnel.

Une fois l'objet fabriqué, la trémie tampon peut contenir une certaine quantité restante de poudre non utilisée.

Si l'objet suivant à fabriquer doit être réalisé à base d'une poudre d'une composition différente ou à base d'une poudre de même composition mais provenant d'un autre lot de fabrication de poudre, il est nécessaire de retirer la poudre non utilisée de la trémie tampon.

Actuellement, on utilise des appareils autonomes d'aspiration pour évacuer d'un dispositif de fabrication additive la poudre non utilisée. Ces appareils ne permettent pas de reconditionner la poudre non utilisée dans des récipients de quantités suffisamment faibles pour être déplacées facilement. En particulier, il n'est pas possible de remplir sous atmosphère inerte des récipients facilement transportables avec la poudre non utilisée.

WO2017/194387A1 décrit un appareil de fabrication additive comprenant une chambre de construction, un conteneur de stockage de poudre fixe et un dispositif d'alimentation en poudre, qui font tous les trois partie d'un système de manipulation de poudre, le système pouvant être fermé hermétiquement, un récipient mobile pouvant être raccordé au système, le système étant conçu pour alimenter sélectivement en poudre le conteneur à partir du récipient ou pour retirer de la poudre de la chambre lorsque le système est fermé hermétiquement.

WO2018/087087A1 décrit une machine comprenant un appareil de transvasement de la poudre d'un pot vers un conteneur, et un dispositif de tamisage de poudre, un module d'inertage étant relié au dispositif, l'appareil comprenant une enceinte de transvasement reliée au module d'inertage par un conduit d'amenée de gaz inerte, l'enceinte pouvant être ouverte puis refermée de manière étanche, l'enceinte comprenant un réceptacle de poudre, une paroi au moins en partie transparente et au moins une paroi équipée de ronds de gant, le réceptacle étant relié par un conduit au dispositif de tamisage.

### EXPOSE DE L'INVENTION

Un but de l'invention est de proposer un dispositif de fabrication additive qui permet de conditionner la poudre non utilisée par portion de faible quantité et sous atmosphère protectrice.

Le but est atteint dans le cadre de la présente invention grâce à un module de fourniture de poudre de fabrication additive comprenant
- une trémie principale pour stocker de la poudre de fabrication additive, la trémie principale étant adaptée pour être connectée à un module de fabrication configuré pour fabriquer additivement un objet sur la base de la poudre se trouvant dans la trémie principale,
- une entrée du module de fourniture adaptée pour être connectée au module de fabrication et recevoir de la poudre se trouvant dans le module de fabrication,
- une boîte à gants adaptée pour recevoir un récipient, la boîte à gants étant propre à être fermée de manière étanche,
- un circuit d'approvisionnement configuré pour transférer de la poudre se trouvant dans la boîte à gants vers la trémie principale,
- un circuit d'extraction différent du circuit d'approvisionnement et configuré pour transférer vers le récipient, lorsque le récipient est reçu dans la boîte à gants, de la poudre de fabrication additive depuis l'entrée du module de fourniture,
la boîte à gants comprenant des gants pour fermer le récipient une fois rempli de poudre, pendant que la boîte à gants est fermée.

Le circuit retour et la présence du boîtier permettent de déplacer de la poudre dans un récipient vide placé dans le boîtier. Le rempotage de la poudre non utilisée est ainsi possible.

Un tel module de fourniture est avantageusement complété par les différentes caractéristiques ou étapes suivantes prises seules ou en combinaison :
la boîte à gants comprend une porte entre la boîte à gants et la trémie principale, mobile entre une première position dans laquelle le circuit d'approvisionnement est ouvert entre la boîte à gants et la trémie principale,
et une deuxième position dans laquelle le circuit d'approvisionnement est fermé et la boîte à gants est séparée de manière étanche de la trémie principale ;
un réservoir relié à la trémie principale, situé en dessous de la trémie principale et comprenant une sortie adaptée pour être connectée au module de fabrication par un conduit de fabrication,
   - un circuit retour configuré pour rediriger vers l'entrée du module de fourniture de la poudre de fabrication additive se trouvant dans le réservoir, le système de mise en circulation étant adapté pour aspirer de la poudre depuis la sortie du réservoir vers l'entrée du module de fourniture ;
le circuit d'extraction comprend un aiguilleur, le module de fourniture comprenant en outre un circuit de dérivation reliant l'aiguilleur au réservoir adapté pour transférer de la poudre directement de l'aiguilleur au réservoir, l'aiguilleur étant configurable dans
   - une configuration d'extraction dans laquelle de la poudre additive en provenance de l'entrée du module de fourniture est redirigée sélectivement vers la boîte à gants,
   - une configuration de rebouclage dans laquelle de la poudre additive en provenance de l'entrée du module de fourniture est redirigée sélectivement dans le circuit de dérivation.

L'invention porte également sur un dispositif de fabrication additive comprenant un module de fourniture de poudre de fabrication additive tel que présenté plus haut, et
- un module de fabrication configuré pour fabriquer additivement un objet sur la base de la poudre se trouvant dans la trémie principale, la trémie principale étant connectée au module de fabrication et l'entrée du module de fourniture étant connectée au module de fabrication.

Avantageusement, mais facultativement, le dispositif peut être complété par un système de récupération pour récupérer de la poudre non consolidée au cours de la fabrication additive de l'objet et pour rediriger la poudre récupérée vers l'entrée du module de fourniture.

L'invention porte également sur un procédé de rempotage de poudre de fabrication additive à l'aide d'un module de fourniture ou à l'aide d'un dispositif de fabrication additive, comme on a pu les présenter plus haut, comprenant des étapes de :
- insertion dans la boîte à gants d'un récipient vide, puis fermeture de la boîte à gants de manière étanche,
- une fois que le récipient est rempli de poudre de fabrication additive transférée depuis l'entrée du module de fourniture, manipulation du récipient de sorte à fermer le récipient, pendant que la boîte à gants est fermée.

Un tel procédé est avantageusement complété par les différentes étapes suivantes prises seules ou en combinaison :
une étape d'acheminement de la poudre depuis le réservoir à l'entrée du module de fourniture ;
une étape d'acheminement de la poudre depuis le système de récupération vers l'entrée du module de fourniture ;
une étape préliminaire de tamisage de poudre.

### DESCRIPTION DES FIGURES

D'autres caractéristiques et avantages de l'invention ressortiront encore de la description qui suit, laquelle est purement illustrative et non limitative, et doit être lue en regard des dessins annexés sur lesquels :
La figure 1, est une représentation schématique d'un dispositif de fabrication additive selon un mode de réalisation de l'invention.

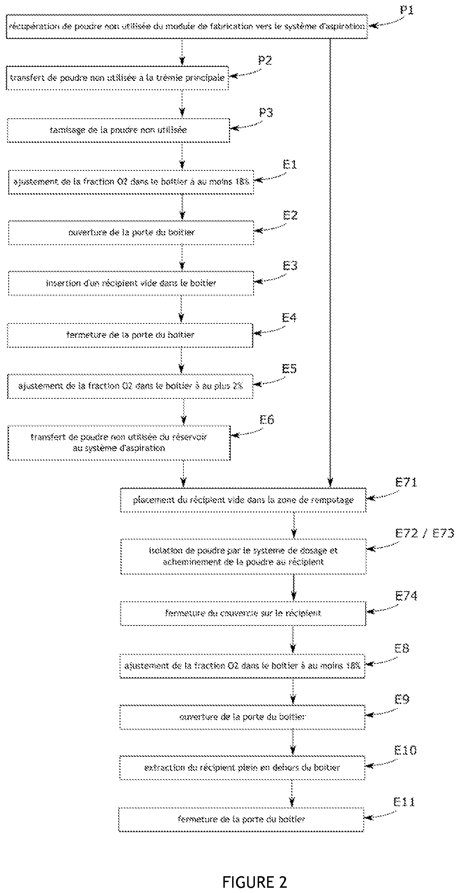

La figure 2, est une représentation schématique d'un procédé de rempotage de poudre de fabrication additive selon un mode de réalisation de l'invention.

### DESCRIPTION DETAILLEE DE L'INVENTION

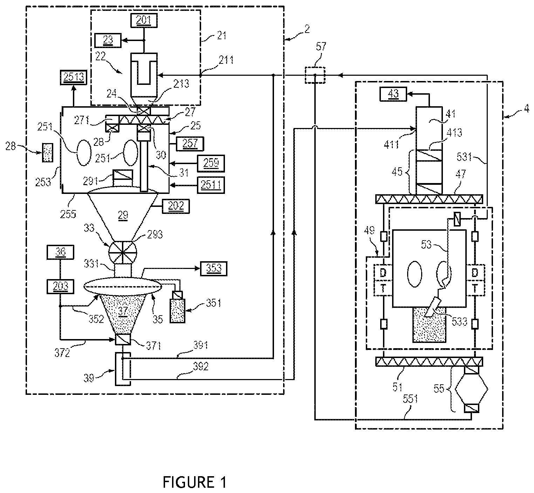

La figure 1 représente un dispositif de fabrication additive 1 comprenant un module de fourniture de poudre 2 et un module de fabrication 4.

### Module de fourniture

Le module de fourniture 2 comprend dans sa partie supérieure un système d'aspiration 21 relié à un premier circuit d'évacuation de gaz 23. Le système d'aspiration 21 présente une entrée 211 et une sortie 213 située au bas du système d'aspiration 21. Le système d'aspiration 21 est adapté pour générer une force d'aspiration au niveau de l'entrée 211 dirigée vers l'intérieur du système d'aspiration 21. Le premier circuit d'évacuation de gaz 23 peut comprendre une pompe à vide pour générer la force d'aspiration. Le système d'aspiration 21 est adapté pour recevoir de la poudre de fabrication additive depuis l'entrée 211 et la conserver. La poudre conservée se situe au bas du système d'aspiration 21 et peut être extraite par la sortie 213.Le système d'aspiration 21 peut comprendre un filtre à poudre pour que la poudre ne passe pas dans le premier circuit d'évacuation 23. Le système d'aspiration 21 comprend un dispositif qui permet de séparer la poudre du gaz comme par exemple un cyclofiltre 22. D'autres dispositifs existent pour séparer la poudre au gaz comme un caisson de filtration comprenant des filtres, un cyclone ou une boîte de décharge.

Le module de fourniture 2 comprend un boîtier 25 situé en dessous du système d'aspiration 21. Le boîtier 25 comprend différentes parois qui définissent une chambre. Le boîtier 25 peut être fermé de sorte que la chambre est un volume hermétiquement clos par rapport à l'extérieur du dispositif. Le boîtier est adapté pour que des objets situés à l'intérieur du boîtier puissent être déplacés et manipulés. En particulier, le boîtier comprend des instruments pour déplacer et manipuler des objets à l'intérieur de la chambre pendant que la chambre est fermée.

Le boîtier 25 peut notamment être une boite à gants. Dans ce cas, le boîtier présente deux orifices dans lesquels sont aménagés des gants 251 de sorte que le caractère étanche du boîtier est conservé. Les gants 251 sont des instruments pour déplacer et manipuler des objets à l'intérieur de la chambre pendant que la chambre est fermée. Un opérateur peut, en enfilant les gants 251, manipuler depuis l'extérieur de la boite à gants 25 des objets situés à l'intérieur de la boite à gants. Une paroi de la boite à gants peut être transparente afin de permettre à l'opérateur d'observer les objets à manipuler.

En particulier les objets peuvent être des récipients ou des pots 28 adaptés pour contenir de la poudre de fabrication additive. Les récipients et les pots peuvent être fermés par des couvercles.

Les instruments du boîtier sont adaptés pour déplacer et fermer des récipients ou des pots 28 à l'intérieur de la chambre pendant que la chambre est fermée.

Une des parois du boîtier 25 présente une première porte 253. La première porte 253 est mobile entre une position ouverte dans laquelle un récipient peut être déplacé de l'extérieur du dispositif dans la chambre ou de la chambre à l'extérieur du dispositif et une position fermée dans laquelle la chambre est séparée de manière étanche de l'extérieur du dispositif. La première porte 253 peut être fermée de façon à ce que le boîtier soit hermétiquement séparé de l'extérieur. Il est également possible de faire entrer ou sortir des couvercles pour fermer les récipients ou les pots.

Le boîtier 25 peut comprendre une zone de transit 255 au sein de laquelle un ou plusieurs récipients peuvent être entreposés et empilés.

Le boîtier 25 peut comprendre un capteur 257 d'oxygène. Le capteur 257 est adapté pour mesurer la fraction en oxygène à l'intérieur du boîtier.

Le boîtier 25 peut comprendre un circuit d'alimentation 259 en air et un circuit d'alimentation 2511 en gaz inerte. Le gaz inerte peut en particulier être du diazote ou de l'Argon.

Le boîtier 25 peut comprendre un deuxième circuit d'évacuation de gaz 2513 qui peut comprendre une pompe à vide pour générer la force d'aspiration.

L'ensemble du circuit d'alimentation 259 en air, du circuit d'alimentation 2511 en gaz inerte et du deuxième circuit d'évacuation de gaz 2513 définit un système de contrôle de flux gazeux qui permet de contrôler la fraction en oxygène et la fraction en gaz inerte dans la chambre.

Le module de fourniture 2 comprend un système de dosage 27 situé en dessous du système d'aspiration 21. Le système de dosage 27 est relié à la sortie 213 du système d'aspiration 21. La poudre conservée dans le système d'aspiration 21 et qui se situe au bas du système d'aspiration 21 peut être extraite par la sortie 213 vers le système de dosage 27.

Une vanne 24 se situe entre le système d'aspiration 21 et le système de dosage 27. La vanne 24 en configuration ouverte permet le passage de poudre et la vanne 24 en configuration fermée permet de séparer de manière étanche le système d'aspiration 21 du système de dosage 27. Lorsque le système d'aspiration 21 aspire de la poudre, la vanne 24 est fermée de sorte que l'aspiration a lieu uniquement au niveau de l'entrée 211 et dirigée vers l'intérieur du système d'aspiration 21. La fermeture de la vanne 24 peut être automatiquement déclenchée par la mise en fonctionnement de l'aspiration de poudre dans le système d'aspiration 21.

Le système de dosage 27 permet d'isoler une quantité précise de poudre à partir de la poudre conservée dans le système de dosage. Cette quantité précise peut être délivrée à une sortie 271 du système de dosage 27. La sortie 271 est située à l'intérieur du boitier 25 et présente une vanne 28. La vanne 28 en configuration ouverte permet le passage de poudre du système de dosage 27 vers l'intérieur du boitier 25 et la vanne 28 en configuration fermée permet de séparer de manière étanche le système de dosage 27 de l'intérieur du boitier 25.

La vanne 28 est notamment fermée lorsque la première porte 253 du boitier 25 est en position ouverte.

Le système de dosage peut être par exemple une vis de dosage. La vis de dosage est contenue dans un fourreau qui s'étend dans une direction qui est classiquement une direction horizontale. Lorsque la vis est mise en mouvement et que de la poudre est versée du système d'aspiration 21 vers le système de dosage 27 par la vanne 24 ouverte, la poudre est acheminée par la vis dans la direction d'extension du fourreau vers la sortie 271.

Le système de dosage peut être également un sas comprenant deux vannes. Le sas présente un volume prédéterminé, et permet d'isoler un volume de poudre précis lorsqu'il est rempli de poudre au travers de la première vanne située du côté du système d'aspiration 21. Le volume de poudre peut ensuite être transféré vers le boitier25 via la deuxième vanne située du côté du boitier 25.

Le boîtier 25 peut comprendre une zone de rempotage adaptée pour recevoir un récipient de poudre sous la sortie 271 du système de dosage 27 à l'intérieur du boîtier 25.

Le module de fourniture 2 comprend une trémie principale 29 qui se situe en dessous du boîtier 25. La trémie principale 29 est un contenant qui permet de conserver de la poudre de fabrication additive.

La trémie principale 29 présente un volume de forme tronconique adapté pour conserver une importante quantité de poudre de fabrication. La trémie principale 29 est orientée de sorte que l'axe de la forme tronconique est vertical et que le volume de la forme tronconique présente une section horizontale plus faible en bas de la trémie. La trémie principale 29 présente une sortie 293 située en bas de la trémie principale.

Le boîtier 25 comprend une deuxième porte 291 agencée entre la chambre et la trémie principale 29, mobile entre une position ouverte dans laquelle de la poudre se trouvant dans la chambre peut être transférée vers la trémie principale 29 et une position fermée dans laquelle la chambre est séparée de manière étanche de la trémie principale 29.

La deuxième porte 291 ou porte d'isolement 291 est par exemple une vanne d'isolement 291. La deuxième porte 291 définit un passage entre le boîtier et la trémie principale qui peut être ouvert ou fermé hermétiquement de manière contrôlée. Le passage peut être orienté verticalement et suffisamment large pour qu'un opérateur puisse vider le contenu d'un pot de poudre depuis le boîtier 25 vers la trémie principale 29.

Le module de fourniture 2 comprend un aiguilleur. L'aiguilleur comprend une entrée et deux sorties.

L'entrée de l'aiguilleur est l'entrée du système de dosage 27 et est reliée à la sortie 213 du système d'aspiration 21. La première sortie de l'aiguilleur est la sortie 271 du système de dosage 27.

La deuxième sortie de l'aiguilleur passe au travers du système de dosage 27 selon une direction verticale. La deuxième sortie peut être dans le prolongement de la direction d'arrivée de la poudre versée du système d'aspiration 21 dans le système de dosage 27. La deuxième sortie est reliée à un circuit de dérivation 31. Le circuit de dérivation 31 relie directement la deuxième sortie de l'aiguilleur et la trémie principale 29. Le canal de dérivation 31 peut être orienté verticalement et passer au travers de la boite à gants. La poudre passant par le circuit de dérivation 31 ne rencontre aucune paroi du boitier 25 et n'est pas en contact direct avec l'atmosphère du boitier 25. En particulier, si la vanne 28 est fermée, la poudre passant par le circuit de dérivation 31 n'est pas en contact avec l'atmosphère du boitier 25.

La deuxième sortie est contrôlée par une vanne 30. La vanne 30 en configuration ouverte permet le passage de poudre du système de dosage 27 vers le canal de dérivation 31 et la vanne 30 en configuration fermée empêche le passage de poudre du système de dosage 27 vers le canal de dérivation 31.

L'aiguilleur est configurable dans une configuration d'extraction dans laquelle de la poudre en sortie du système de dosage est dirigée sélectivement vers la boîte à gants 25. Dans cette configuration, la vanne 30 est en configuration fermée, et la vis de dosage est mise en route pour acheminer de la poudre vers la sortie 271 du système de dosage.

L'aiguilleur est configurable dans une configuration de rebouclage dans laquelle de la poudre en sortie du système de dosage 21 est dirigée sélectivement vers la deuxième sortie de l'aiguilleur. Dans cette configuration, la vanne 30 est en configuration ouverte, et la vis de dosage est à l'arrêt.

L'aiguilleur peut donc être considéré comme étant formé par le système de dosage 27 et la vanne 30.

Le module de fourniture 2 comprend un doseur 33, situé en dessous de la trémie principale 29. Le doseur 33 permet d'ajuster le débit de poudre envoyé au tamiseur 35 afin ne pas dégrader un tamis compris à l'intérieur du tamiseur 35. Le doseur 33 est relié à la sortie 293 de la trémie principale. Le doseur 33 comporte une sortie 331 située en bas du doseur 33.

Le module de fourniture 2 comprend un tamiseur 35, situé en dessous du doseur 33. Le tamiseur 35 est relié à la sortie 331 du doseur 33. Le tamiseur permet de filtrer les amas agglomérés de poudre et de les isoler du reste de la poudre au sein d'un réceptacle 351. Le tamiseur comprend un troisième circuit d'évacuation 353 qui peut comprendre une pompe à vide pour générer la force d'aspiration.

Le module de fourniture 2 comprend un réservoir 37 situé en dessous du tamiseur 35. Le réservoir 37 peut être une trémie présentant un volume de forme tronconique adapté pour conserver une importante quantité de poudre de fabrication. Cette trémie peut être orientée de sorte que l'axe de la forme tronconique est vertical et que le volume de la forme tronconique présente une section horizontale plus faible en bas de la trémie. Le réservoir 37 présente une sortie 371 située en bas du réservoir.

Il est possible de transférer de la poudre depuis la boîte à gants 25 vers le réservoir 37 lorsque la deuxième porte 291 est en position ouverte. La poudre peut alors passer successivement de la boîte à gants 25, à la trémie principale 29, au doseur 33, au tamiseur 35 puis enfin au réservoir 37. Il est possible de définir ainsi un circuit d'approvisionnement configuré pour transférer de la poudre se trouvant dans la boîte à gants 25 vers la trémie principale 29 ou plus loin le réservoir 37. La deuxième porte 291 qui définit un passage entre le boîtier et la trémie principale qui peut être ouvert ou fermé hermétiquement de manière contrôlée peut ouvrir ou fermer le circuit d'approvisionnement.

Le module de fourniture 2 comprend un système d'alimentation 36 en gaz inerte sec. Le système d'alimentation 36 peut fournir un flux de gaz inerte sec dans un conduit 352 relié au tamiseur 35. Le flux de gaz inerte sec passant par le conduit 352 est orienté du bas vers le haut de sorte à rencontrer de la poudre passant au travers du tamiseur du bas vers le haut. Le flux de gaz inerte arrivant par le conduit 352 dans le tamiseur 35 se diffuse également dans la partie supérieure du réservoir 37.

Le conduit 352 et le troisième circuit d'évacuation 353 peuvent être alignés selon une même direction, de sorte qu'un flux de gaz inerte, en suivant une même direction, peut passer successivement par le conduit 352, rencontrer de la poudre passant à travers le tamiseur et enfin passer par le troisième circuit d'évacuation 353.

Le système d'alimentation 36 peut également fournir un flux de gaz inerte sec dans un conduit 372 relié au bas du réservoir 37, par exemple à la sortie 371.

La sortie 371 du réservoir est reliée à un circuit retour 391. Le circuit retour 391 connecte la sortie 371 du réservoir 37 et l'entrée 211 du système d'aspiration 21. Le circuit retour 391 connecte la sortie 371 du réservoir 37 et le boîtier 25. Il est possible de transporter de la poudre depuis le réservoir 37 vers le boîtier 25 de la poudre en passant par le système d'aspiration 21. Le système d'aspiration 21 peut aspirer la poudre du réservoir 37 vers le système d'aspiration 21 à travers le circuit retour 391.

La sortie 371 du réservoir est également reliée à un conduit de fabrication 392. Le conduit de fabrication 392 connecte la sortie 371 du réservoir 37 et le module de fabrication 4, de sorte que de la poudre contenue dans le réservoir 37 peut être transférée vers le module de fabrication 4.

Le tamiseur 35 est situé juste au-dessus du réservoir 37 de sorte que la poudre contenue dans le réservoir 37 et transmise au module de fabrication 4 est tamisée le plus tard possible avant son envoi vers le module de fabrication 4.

Le réservoir 37 peut présenter un volume plus faible que la trémie principale 29. Le rôle du réservoir 37 est de conserver la poudre juste avant son transport soit vers le module de fabrication 4 soit vers le système d'aspiration 21. Le réservoir 37 peut être qualifiée de trémie tampon.

La trémie principale 29 est adapté pour contenir une part importante de la poudre de fabrication nécessaire à la fabrication additive d'un ou plusieurs objets tridimensionnels. La poudre contenue dans la trémie principale 29 est destinée à être transmise au module de fabrication 4. A cet effet, la trémie principale 29 est adaptée pour être connectée au module de fabrication 4 configuré pour fabriquer additivement un objet sur la base de la poudre se trouvant dans la trémie principale 29. La connexion de la trémie principale 29 au module de fabrication est réalisée par la circulation de poudre passant par le doseur 33, le tamiseur 35, le réservoir ou trémie tampon 37 et enfin le conduit de fabrication 392.

Le module de fourniture 2 comprend un contrôleur 39 qui permet d'aiguiller la poudre depuis la sortie 371 vers le circuit retour 391 ou vers le conduit de fabrication 392.

Le module de fourniture 2 peut comprendre un capteur d'humidité 201 situé sur le premier circuit d'évacuation de gaz 23. Ce capteur d'humidité 201 permet de connaître le taux d'humidité des gaz évacués par le système d'aspiration 21, c'est-à-dire le taux d'humidité en amont de l'entrée 211 du système d'aspiration 21.

Le module de fourniture 2 peut comprendre un capteur d'humidité 202 situé sur une partie supérieure de la trémie principale 29. Ce capteur d'humidité 202 permet de connaître le taux d'humidité dans la trémie principale 29 et de renseigner directement sur le taux d'humidité d'une poudre éventuellement présente dans la trémie principale 29.

Le module de fourniture 2 peut comprendre un capteur d'humidité 203 relié au le système d'alimentation 36 en gaz inerte sec. Ce capteur d'humidité 203 permet de connaître le taux d'humidité du gaz inerte sec envoyé vers le tamiseur 35 ou le réservoir 37.

Le module de fourniture 2 comprend un système de mise en circulation comprenant le système d'aspiration 21.

Le système d'aspiration 21 peut aspirer la poudre du réservoir 37 vers le système d'aspiration 21 à travers le circuit retour 391.

### Module de fabrication

Le module de fabrication 4 comprend dans sa partie supérieure un deuxième système d'aspiration 41 relié à un quatrième circuit d'évacuation de gaz 43. Le deuxième système d'aspiration 41 présente une entrée 411 et une sortie 413 située au bas du deuxième système d'aspiration 41. Le deuxième système d'aspiration 41 est adapté pour générer une force d'aspiration au niveau de l'entrée 411 dirigée vers l'intérieur du deuxième système d'aspiration 41. L'entrée 411 du deuxième système d'aspiration 41 est connectée au conduit de fabrication 392. Le quatrième circuit d'évacuation de gaz 43 peut comprendre une pompe à vide pour générer la force d'aspiration. Le système d'aspiration 41 peut comprendre un filtre à poudre pour que la poudre ne passe pas dans le quatrième circuit d'évacuation de gaz 43. Le deuxième système d'aspiration 41 comprend un dispositif qui permet de séparer la poudre du gaz comme par exemple un cyclone. D'autres dispositifs existent pour séparer la poudre au gaz comme un caisson de filtration comprenant des filtres, un cyclofiltre ou une boîte de décharge. Le deuxième système d'aspiration 41 est adapté pour recevoir de la poudre de fabrication additive depuis l'entrée 411, et la conserver. La poudre conservée se situe au bas du deuxième système d'aspiration 41 et peut être extraite par la sortie 413.

Le module de fabrication 4 comprend un sas 45 situé en dessous du deuxième système d'aspiration 41. Le sas 45 permet de transmettre de la poudre sans que la chambre de l'imprimante ne soit jamais en communication avec le deuxième système d'aspiration 41 pour éviter de perturber l'enceinte d'impression vis-à-vis de l'inertage et de la pression.

Le module de fabrication 4 comprend une vis divergente 47 et une vis convergente 51 situées de part et d'autre d'une enceinte 49 au sein de laquelle les objets tridimensionnels sont fabriqués. L'enceinte 49 est la chambre de l'imprimante.

Le module de fabrication 4 comprend un système de récupération de la poudre étalée et non consolidée en fin de fabrication.

Le système de récupération peut comprendre une canne d'aspiration 53 adaptée pour aspirer de la poudre. La canne d'aspiration 53 comprend un bec d'aspiration 533 qui constitue l'entrée de la canne d'aspiration. La poudre est aspirée au niveau du bec et transmise vers l'autre extrémité de la canne qui constitue la sortie de la canne d'aspiration 53. Le dispositif de fabrication 1 peut comprendre un premier conduit de récupération 531 qui connecte la sortie de la canne d'aspiration 53 et l'entrée 211 du système d'aspiration 21.

Le système de récupération peut comprendre un sas excédant 55 adapté pour récupérer de la poudre en provenance de la vis convergente 51.

Le dispositif de fabrication 1 peut comprendre un deuxième conduit de récupération 551 qui connecte le sas excédant 55 et l'entrée 211 du système d'aspiration 21.

Le sas excédant 55 permet de transmettre de la poudre sans que la chambre de l'imprimante ne soit jamais en communication avec le deuxième conduit de récupération 551 pour éviter de perturber l'enceinte d'impression vis-à-vis de l'inertage et de la pression.

Le dispositif de fabrication 1 peut également comprendre un deuxième contrôleur adapté pour faire circuler la poudre de manière contrôlée depuis le système de récupération vers le système d'aspiration 21.

L'entrée 211 peut à ce titre être qualifiée d'entrée du module de fourniture 2 adaptée pour être connectée au module de fabrication 4 et recevoir de la poudre se trouvant dans le module de fabrication 4.

Il est à noter que le dispositif de fabrication 1 comprend suffisamment de vannes au niveau des croisements de conduits 391, 392, 531 et 551 pour permettre les circulations de poudre mentionnées dans la description.

Il est à noter également qu'il est possible de transférer de la poudre depuis l'entrée 211 vers la boite à gants 25. La poudre passe successivement par le système d'aspiration 21, la sortie 213 du système d'aspiration 21, le système de dosage 27, l'aiguilleur 27, 30 configuré dans sa configuration d'extraction et enfin la boîte à gants 25. Plus précisément, la poudre qui arrive dans la boite à gants 25 peut être versée dans un récipient contenu dans la boite à gants 25. Il existe ainsi un circuit d'extraction différent du circuit d'approvisionnement et configuré pour transférer vers le récipient, lorsque le récipient est reçu dans la boîte à gants 25, de la poudre de fabrication additive depuis l'entrée 211 du module de fourniture 2, le circuit d'extraction comprenant l'aiguilleur 27,30.

### Procédé de chargement

Le module de fourniture 2 permet le chargement et le tamisage de la poudre de fabrication selon les étapes décrites ci-après. Initialement, le boîtier 25 est fermé hermétiquement et ne contient aucun récipient, la trémie principale 29 et le réservoir 37 sont vides de poudre. Le passage entre le boîtier et la trémie principale défini par la deuxième porte 291 est initialement fermé hermétiquement.

Au cours d'une première étape S1, la fraction en oxygène à l'intérieur du boîtier est ajustée pour atteindre au moins 18%. Le capteur 257 d'oxygène acquiert une mesure de la fraction en oxygène à l'intérieur du boîtier 25. Selon la mesure, le circuit d'alimentation 259 en air est activé pour augmenter la fraction d'oxygène. Le circuit d'évacuation de gaz 2513 est activé pour maintenir sensiblement la pression atmosphérique dans le boîtier 25. Le capteur 257 d'oxygène permet de s'assurer que la fraction en oxygène est au moins de 18% dans le boîtier.

Au cours d'une deuxième étape S2, la porte 253 du boîtier 25 est ouverte et un récipient de poudre est inséré ou plusieurs récipients de poudre sont insérés dans le boîtier 25. Les récipients peuvent être placés dans la zone de transit 255 du boîtier 25.

Au cours d'une troisième étape S3, la porte 253 du boîtier 25 est fermée et la fraction en oxygène dans le boîtier est ajustée à au plus 2%. Le circuit d'alimentation 2511 en gaz inerte est activé pour diminuer la fraction d'oxygène. Le circuit d'évacuation de gaz 2513 est activé pour maintenir sensiblement la pression atmosphérique dans le boîtier 25. La réduction de la fraction en oxygène à au plus 2% peut être désignée sous le terme d'inertage. Le capteur 257 d'oxygène permet de s'assurer que la fraction en oxygène est au plus 2% dans le boîtier.

Au cours d'une quatrième étape S4, la trémie principale 29 est chargée. La porte d'isolement 291 est activée pour ouvrir le passage entre le boîtier et la trémie principale. L'opérateur manipule, grâce aux instruments 251, un récipient plein dans la zone de transit 255 de sorte que le récipient est ouvert et que le contenu du récipient est versé à travers le passage dans la trémie principale 29. Par exemple, l'opérateur enfile les gants du boîtier 25, saisit un récipient plein dans la zone de transit 255, ouvre le récipient et verse le contenu du récipient à travers le passage dans la trémie principale 29. L'opérateur repose le récipient vide dans la zone de transit 255 et procède de manière identique jusqu'à ce que tous les récipients dans le boîtier soient vides.

Au cours d'une cinquième étape S5, la porte d'isolement 291 est fermée de sorte à fermer hermétiquement le passage entre le boîtier et la trémie principale.

Au cours d'une sixième étape S6, la fraction en oxygène à l'intérieur du boîtier est ajustée pour atteindre au moins 18%. Le circuit d'alimentation 259 en air est activé pour augmenter la fraction d'oxygène. Le circuit d'évacuation de gaz 2513 est activé pour maintenir sensiblement la pression atmosphérique dans le boîtier 25. Le capteur 257 d'oxygène permet de s'assurer que la fraction en oxygène est d'au moins 18% dans le boîtier.

Au cours d'une septième étape S7, la porte 253 du boîtier 25 est ouverte et le ou les récipient(s) de poudre vides sont sortis du boîtier 25.

Au cours d'une huitième étape S8, la porte 253 du boîtier 25 est fermée de manière hermétique.

Au cours d'une neuvième étape S9, la poudre est tamisée et conservée dans le réservoir37. La poudre contenue dans la trémie principale 29 est transmise vers le tamiseur 35 à travers le doseur 33. Le tamiseur 35 tamise la poudre et extrait les amas de poudre et les agrégats de poudre trop importants. Ces amas sont transmis vers le réceptacle 351 et sont conservés dans le réceptacle. La poudre tamisée traverse le tamiseur 35 et passe dans le réservoir 37 dans laquelle elle est conservée avant utilisation.

### Procédé de rempotage

Le module de fourniture 2 permet le rempotage de la poudre de fabrication non utilisée. Il est présenté plus bas le procédé de rempotage de la poudre non utilisée qui se situe initialement dans le réservoir 37 selon les étapes ci-après. Initialement, le boîtier 25 est fermé hermétiquement et ne contient aucun récipient, le réservoir 37 contient de la poudre non utilisée. Le passage entre le boîtier et la trémie principale défini par la porte d'isolement 291 est initialement fermé hermétiquement.

Il est à noter que si la poudre non utilisée est contenue dans la trémie principale 29, celle-ci est transférée au réservoir 37. Ce transfert peut éventuellement être réalisé en plusieurs fois si le volume du réservoir 37 ne permet pas de contenir toute la poudre non utilisée.

Au cours d'une première étape E1, la fraction en oxygène à l'intérieur du boîtier est ajustée pour atteindre au moins 18%. Le capteur 257 d'oxygène acquiert une mesure de la fraction en oxygène à l'intérieur du boîtier 25. Selon la mesure, le circuit d'alimentation 259 en air est activé pour augmenter la fraction d'oxygène. Le circuit d'évacuation de gaz 2513 est activé pour maintenir sensiblement la pression atmosphérique dans le boîtier 25. Le capteur 257 d'oxygène permet de s'assurer que la fraction en oxygène est au moins de 18% dans le boîtier.

Au cours d'une deuxième étape E2, la porte 253 du boîtier 25 est ouverte.

Au cours d'une troisième étape E3, un récipient vide est inséré ou plusieurs récipients vides sont insérés dans le boîtier 25. Les récipients peuvent être placés dans la zone de transit 255 du boîtier 25. Les couvercles des récipients sont également insérés. Les récipients peuvent être entrés ouverts. Les récipients peuvent être entrés fermés en particulier s'ils contiennent une atmosphère inertée, c'est-à-dire avec une composition gazeuse d'au plus 2% d'oxygène et au moins 98% de gaz inerte.

Au cours d'une quatrième étape E4, la porte 253 du boîtier 25 est fermée de manière hermétique.

Au cours d'une cinquième étape E5, la fraction en oxygène dans le boîtier est ajustée à au plus 2%. Le circuit d'alimentation 2511 en gaz inerte est activé pour diminuer la fraction d'oxygène. Le circuit d'évacuation de gaz 2513 est activé pour maintenir sensiblement la pression atmosphérique dans le boîtier 25. Le capteur 257 d'oxygène permet de s'assurer que la fraction en oxygène est au plus 2% dans le boîtier.

Au cours d'une sixième étape E6, la poudre non utilisée est transportée du réservoir 37 ou de la trémie principale 29 vers le système d'aspiration 21. Le contrôleur 39 est activé de sorte que la sortie 371 du réservoir est connectée au circuit retour 391.

Le circuit d'alimentation 372 en gaz inerte relié en haut du réservoir et en bas du réservoir est activé pour entraîner la poudre non utilisée dans le circuit retour 391. Le système d'aspiration 21 est activé pour générer une force d'aspiration au niveau de l'entrée 211 dirigée vers l'intérieur du système d'aspiration 21. Cette mise en mouvement peut être faite selon les différents régimes possibles de transport : régime en phase dense, régime en phase diluée, etc... La concentration en poudre dans les conduits de circulation et la vitesse du flux de gaz sont contrôlables à cet effet.

Au cours d'une septième étape E7 une boucle de sous étapes est réalisée. Cette boucle est réalisée avec l'aiguilleur qui est configuré dans la configuration d'extraction.

Au cours d'une première sous-étape E71, un récipient vide est déplacé de la zone de transit 255 vers la zone de rempotage sous le système de dosage.

Au cours d'une deuxième sous-étape E72, le système de dosage 27 est actionné pour isoler une quantité de poudre à partir de la poudre conservée dans le système d'aspiration 21. Cette quantité est inférieure ou égale à une contenance maximale du récipient.

Au cours d'une troisième sous-étape E73, le système de dosage est actionné pour extraire la poudre. La position du récipient permet que la poudre entre alors dans le récipient.

Au cours d'une quatrième sous-étape E74, le récipient et son couvercle sont manipulés à l'aide des instruments 251 de sorte à fermer le récipient avec le couvercle. L'opérateur ferme le récipient avec le couvercle et place le récipient rempli dans la zone transitoire.

La boucle de sous-étapes est reprise s'il reste de la poudre non utilisée dans le système d'aspiration et s'il reste un récipient vide dans la zone transitoire. Si les deux conditions sont réalisées alors la boucle est reprise et les sous étapes E71, E72 E73 et E74 sont réalisées avec un nouveau récipient vide. Autrement, la boucle est interrompue et une huitième étape E8 est réalisée.

Au cours de la huitième étape E8, la fraction en oxygène à l'intérieur du boîtier est ajustée pour atteindre au moins 18%. Le circuit d'alimentation 259 en air est activé pour augmenter la fraction d'oxygène. Le circuit d'évacuation de gaz 2513 est activé pour maintenir sensiblement la pression atmosphérique dans le boîtier 25. Le capteur 257 d'oxygène permet de s'assurer que la fraction en oxygène est au moins de 18% dans le boîtier.

Au cours d'une neuvième étape E9, la porte 253 du boîtier 25 est ouverte.

Au cours d'une dixième étape E10, le récipient rempli et fermé ou les récipients remplis et fermés sont extraits du boîtier 25.

Au cours d'une onzième étape E11, la porte du boîtier est fermée hermétiquement.

Le module de fourniture 2 comprend à la fois un boîtier 25 qui permet de remplir la trémie principale 29 avec des récipients de poudre et un système d'aspiration 21, un système de dosage 27, une trémie principale, un doseur de poudre 33, un tamiseur de poudre 35 et un réservoir 37.

Lorsque de la poudre reste conservée dans le réservoir 37 alors que le processus de fabrication est achevé, la poudre non utilisée peut être transportée vers le système d'aspiration 21 en passant par le circuit retour 391.

La présence du boîtier situé en aval du système de dosage permet alors de transporter la poudre non utilisée du système d'aspiration 21 vers des récipients vides placés dans le boîtier. Le rempotage de la poudre non utilisée est possible.

La poudre non utilisée peut être reconditionnée par portion de plus faible quantité que dans l'art antérieur. Les portions comme les récipients de poudre sont suffisamment légères pour être manipulables et déplaçables par un opérateur. Ce reconditionnement peut être effectué sous atmosphère protectrice grâce au boîtier.

Il est à noter que le système de dosage 27 et le conduit de dérivation 31 permettent de faire circuler la poudre depuis le système d'aspiration soit vers le boîtier 25 soit vers la trémie principale 29. De cette manière, il est possible, comme dans l'art antérieur de retamiser de la poudre non utilisée en provenance du module de fabrication 4 avant sa réutilisation sans rempotage. En effet il est possible d'aspirer la poudre non utilisée par le système d'aspiration 21 puis de la déplacer directement dans la trémie principale 29 par le tuyau de dérivation 31. La poudre non utilisée peut ensuite être tamisée et conservée dans le réservoir 37.

### Procédé de rempotage de poudre en provenance du module de fabrication

Dans le procédé de rempotage qui vient d'être présenté la poudre non utilisée est initialement située dans le réservoir 37 ou la trémie principale 29.

Le module de fourniture 2 permet également le rempotage de la poudre de fabrication non utilisée qui se situe initialement dans le module de fabrication 4. Dans ce cas, la poudre de fabrication a été transmise au module de fabrication 4, puis elle a été étalée lors du processus de fabrication d'un objet tridimensionnel. Une partie de la poudre qui n'est pas consolidée à l'issue de ce processus et qui entoure les objets fabriqués est récupérée par le système de récupération par la canne s'aspiration 53 et une autre partie de la poudre non consolidée, dite poudre excédentaire, est récupérée via la vis convergente et le sas excédant.

Au cours d'une étape P1, la poudre non utilisée est transportée vers le système d'aspiration 21. La poudre est aspirée par le système d'aspiration 21 et passe au travers du premier conduit de récupération 531 ou au travers du deuxième conduit de récupération 551.

La poudre non utilisée se trouve contenue dans le système d'aspiration 21 à l'issue de l'étape P1.

Si la poudre non utilisée est destinée à être jetée, alors le procédé de rempotage se poursuit en suivant les étapes E7 à E11 présentées plus haut.

Si la poudre non utilisée est destinée à être réutilisée ultérieurement, alors il est souhaitable de retamiser la poudre non utilisée avant de la rempoter. Dans ce cas le procédé de rempotage comprend les étapes suivantes.

Au cours d'un étape P2 la poudre non utilisée est déplacée dans la trémie principale 29 : l'aiguilleur (27,30) est configuré en configuration rebouclage de sorte que la poudre non utilisée contenue dans le système d'aspiration 21 est transportée vers le canal de dérivation 31. La poudre non utilisée s'écoule alors depuis la sortie 213 du système d'aspiration 21 vers la trémie principale 29 en passant par le canal de dérivation 31.

Au cours d'un étape P3, le tamiseur 35 tamise la poudre non utilisée. La poudre contenue dans la trémie principale 29 est transmise vers le tamiseur 35 à travers le doseur 33. Le tamiseur 35 tamise la poudre et extrait les amas de poudre et les agrégats de poudre trop importants. Ces amas sont transmis vers le réceptacle 351 et sont conservés dans le réceptacle.

En fin d'étape P3 la poudre tamisée sort du tamiseur 35 et passe dans le réservoir 37.

La suite du procédé de rempotage suit les étapes E1 à E11 déjà présentées plus haut.

La présence des canaux de récupération 531 et 551 permet d'acheminer vers le système d'aspiration 21 de la poudre non consolidée et récupérée dans le module de fabrication 2 par le système de récupération. Cette poudre peut être ensuite conditionnée en quantités suffisamment faibles pour être déplacées par un opérateur, par exemple dans des récipients de poudre.

La présence du boîtier située en aval du système de dosage permet alors de verser la poudre non utilisée du système d'aspiration 21 dans des récipients vides placés dans le boîtier. Le rempotage de la poudre non utilisée est possible sous atmosphère protectrice grâce au boîtier 25 placé à cet endroit. Cette utilisation permet de reconditionner sous atmosphère protectrice par quantités transportables par un opérateur avant de la jeter.

Il est à noter que cette poudre peut être retamisée avant rempotage. Grâce à l'aiguilleur 27, 30 il est possible de transporter la poudre du système d'aspiration 21 à travers le conduit de dérivation 31 vers la trémie principale 29. Cette poudre non utilisée peut alors être retamisée par le tamiseur 35. Par la suite la poudre non utilisée et retamisée est renvoyée via le circuit retour 391 vers le système d'aspiration 21. Depuis le système d'aspiration 21, la poudre peut être versée cette fois vers le boîtier 25 pour reconditionnement, l'aiguilleur 27, 30 étant configuré dans la configuration d'extraction. Il est ainsi possible de reconditionner de la poudre sous atmosphère protectrice par quantités transportables par un opérateur avant de la conserver pour une éventuelle réutilisation ultérieure.

## Revendications

1. Module de fourniture (2) de poudre de fabrication additive comprenant
- une trémie principale (29) pour stocker de la poudre de fabrication additive, la trémie principale (29) étant adaptée pour être connectée à un module de fabrication (4) configuré pour fabriquer additivement un objet sur la base de la poudre se trouvant dans la trémie principale (29),
- une entrée (211) du module de fourniture (2) adaptée pour être connectée au module de fabrication (4) et recevoir de la poudre se trouvant dans le module de fabrication (4),
- une boîte à gants (25) adaptée pour recevoir un récipient (28), la boîte à gants (25) étant propre à être fermée de manière étanche,
- un circuit d'approvisionnement configuré pour transférer de la poudre se trouvant dans la boîte à gants (25) vers la trémie principale (29),
**caractérisé en ce qu'**il comprend en outre
- un circuit d'extraction différent du circuit d'approvisionnement et configuré pour transférer vers le récipient (28), lorsque le récipient (28) est reçu dans la boîte à gants (25), de la poudre de fabrication additive depuis l'entrée (211) du module de fourniture (2),
la boîte à gants (25) comprenant des gants (251) pour fermer le récipient (28) une fois rempli de poudre, pendant que la boîte à gants (25) est fermée.

2. Module de fourniture (2) selon la revendication 1 dans lequel la boîte à gants (25) comprend une porte (291) entre la boîte à gants (25) et la trémie principale (29), mobile entre une première position dans laquelle le circuit d'approvisionnement est ouvert entre la boîte à gants (25) et la trémie principale (29), et une deuxième position dans laquelle le circuit d'approvisionnement est fermé et la boîte à gants (25) est séparée de manière étanche de la trémie principale (29).

3. Module de fourniture (2) selon la revendication 1 ou 2 comprenant un réservoir (37) relié à la trémie principale (29), situé en dessous de la trémie principale (29) et comprenant une sortie (371) adaptée pour être connectée au module de fabrication (4) par un conduit de fabrication (392),
- un circuit retour (391) configuré pour rediriger vers l'entrée (211) du module de fourniture (2) de la poudre de fabrication additive se trouvant dans le réservoir (37),
- un système de mise en circulation adapté pour aspirer de la poudre depuis la sortie (371) du réservoir (37) vers l'entrée (211) du module de fourniture (2).

4. Module de fourniture (2) selon la revendication 3 dans lequel le circuit d'extraction comprend un aiguilleur (27,30), le module de fourniture (2) comprenant en outre un circuit de dérivation (31) reliant l'aiguilleur (27, 30) au réservoir (37) adapté pour transférer de la poudre directement de l'aiguilleur (27,30) au réservoir (37), l'aiguilleur (27, 30) étant configurable dans
- une configuration d'extraction dans laquelle de la poudre additive en provenance de l'entrée (211) du module de fourniture (2) est redirigée sélectivement vers la boîte à gants (25),
- une configuration de rebouclage dans laquelle de la poudre additive en provenance de l'entrée (211) du module de fourniture (2) est redirigée sélectivement dans le circuit de dérivation (31).

5. Dispositif de fabrication additive (1) comprenant
- un module de fourniture (2) de poudre de fabrication additive selon l'une des revendications 1 à 4, et
- un module de fabrication (4) configuré pour fabriquer additivement un objet sur la base de la poudre se trouvant dans la trémie principale (29), la trémie principale (29) étant connectée au module de fabrication (4) et l'entrée (211) du module de fourniture (2) étant connectée au module de fabrication (4).

6. Dispositif de fabrication additive (1) selon la revendication 5, comprenant par ailleurs un système de récupération (53, 55) pour récupérer de la poudre non consolidée au cours de la fabrication additive de l'objet et pour rediriger la poudre récupérée vers l'entrée (211) du module de fourniture (2).

7. Procédé de rempotage de poudre de fabrication additive à l'aide d'un module de fourniture (2) selon l'une des revendications 1 à 4 ou d'un dispositif selon l'une des revendications 5 à 6, comprenant des étapes de :
- insertion (E3) dans la boîte à gants (25) d'un récipient vide, puis fermeture (E4) de la boîte à gants (25) de manière étanche,
- une fois que le récipient est rempli de poudre de fabrication additive transférée depuis l'entrée (211) du module de fourniture (2), manipulation (E74) du récipient de sorte à fermer le récipient, pendant que la boîte à gants (25) est fermée.

8. Procédé de rempotage selon la revendication 7 à l'aide d'un module de fourniture (2) selon l'une des revendications 3 à 4 comprenant une étape d'acheminement (E6) de la poudre depuis le réservoir (37) à l'entrée (211) du module de fourniture (2).

9. Procédé de rempotage de poudre de fabrication additive selon la revendication 8 à l'aide d'un dispositif selon la revendication 6 comprenant une étape d'acheminement (P1) de la poudre depuis le système de récupération (53, 55) vers l'entrée (211) du module de fourniture (2).

10. Procédé de rempotage de poudre de fabrication additive selon l'une des revendications 7 à 9, comprenant une étape préliminaire (P3) de tamisage de poudre.

## Patentansprüche

1. Versorgungsmodul (2) für Pulver zur additiven Fertigung, umfassend
- einen Haupttrichter (29) zum Lagern des Pulvers zur additiven Fertigung, wobei der Haupttrichter (29) geeignet ist, an ein Fertigungsmodul (4) angeschlossen zu werden, das dazu konfiguriert ist, einen Gegenstand auf der Basis des Pulvers, das sich in dem Haupttrichter (29) befindet, additiv zu fertigen,
- einen Einlass (211) des Versorgungsmoduls (2), der geeignet ist, an das Fertigungsmodul (4) angeschlossen zu werden und Pulver, das sich in dem Fertigungsmodul (4) befindet, aufzunehmen,
- einen Handschuhkasten (25), der geeignet ist, einen Behälter (28) aufzunehmen, wobei der Handschuhkasten (25) dicht geschlossen werden kann,
- einen Zuführkreis, der dazu konfiguriert ist, Pulver, das sich in dem Handschuhkasten (25) befindet, zu dem Haupttrichter (29) zu transferieren,
**dadurch gekennzeichnet, dass** es ferner umfasst
- einen Austragkreis, der von dem Zuführkreis verschieden ist und dazu konfiguriert ist, zu dem Behälter (28), wenn der Behälter (28) in dem Handschuhkasten (25) aufgenommen ist, Pulver zur additiven Fertigung vom Einlass (211) des Versorgungsmoduls (2) aus zu transferieren,
wobei der Handschuhkasten (25) Handschuhe (251) umfasst, um den Behälter (28), sobald er mit Pulver gefüllt ist, zu schließen, während der Handschuhkasten (25) geschlossen ist.

2. Versorgungsmodul (2) nach Anspruch 1, bei dem der Handschuhkasten (25) eine Tür (291) zwischen dem Handschuhkasten (25) und dem Haupttrichter (29) umfasst, die zwischen einer ersten Stellung, in welcher der Versorgungskreis zwischen dem Handschuhkasten (25) und dem Haupttrichter (29) geöffnet ist, und einer zweiten Stellung, in welcher der Versorgungskreis geschlossen ist und der Handschuhkasten (25) von dem Haupttrichter (29) dicht getrennt ist, beweglich ist.

3. Versorgungsmodul (2) nach Anspruch 1 oder 2, umfassend einen mit dem Haupttrichter (29) verbundenen Behälter (37), der unter dem Haupttrichter (29) angeordnet ist und einen Auslass (371) umfasst, der geeignet ist, an das Fertigungsmodul (4) über eine Fertigungsleitung (392) angeschlossen zu werden,
- einen Rückkreis (391), der dazu ausgestaltet ist, Pulver zur additiven Fertigung, das sich in dem Behälter (37) befindet, zum Einlass (211) des Fertigungsmoduls (2) zurückzuführen,
- ein Zirkulationssystem, das geeignet ist, Pulver vom Auslass (371) des Behälters (37) aus zum Einlass (211) des Versorgungsmoduls (2) hin anzusaugen.

4. Versorgungsmodul (2) nach Anspruch 3, bei dem der Austragkreis eine Weiche (27, 30) umfasst, wobei das Versorgungsmodul (2) ferner einen die Weiche (27, 30) mit dem Behälter (37) verbindenden Bypasskreis (31) umfasst, der geeignet ist, Pulver direkt von der Weiche (27, 30) zum Behälter (37) zu transferieren, wobei die Weiche (27, 30) konfigurierbar ist in
- eine Austragkonfiguration, in der vom Einlass (211) des Versorgungsmoduls (2) kommendes additives Pulver selektiv zu dem Handschuhkasten (25) hin umgeleitet wird,
- eine Rückschleifkonfiguration, in der vom Einlass (211) des Versorgungsmoduls (2) kommendes additives Pulver selektiv in den Bypasskreis (31) umgeleitet wird.

5. Vorrichtung zur additiven Fertigung (1), umfassend
- ein Versorgungsmodul (2) für Pulver zur additiven Fertigung nach einem der Ansprüche 1 bis 4 und
- ein Fertigungsmodul (4), das dazu konfiguriert ist, einen Gegenstand auf der Basis des Pulvers, das sich in dem Haupttrichter (29) befindet, additiv zu fertigen, wobei der Haupttrichter (29) an das Fertigungsmodul (4) angeschlossen ist und wobei der Einlass (211) des Versorgungsmoduls (2) an das Fertigungsmodul (4) angeschlossen ist.

6. Vorrichtung zur additiven Fertigung (1) nach Anspruch 5, umfassend im Übrigen ein Rückgewinnungssystem (53, 55), um Pulver, das während der additiven Fertigung des Gegenstands nicht verfestigt wurde, zurückzugewinnen und um das zurückgewonnene Pulver zum Einlass (211) des Versorgungsmoduls (2) hin zurückzuführen.

7. Verfahren zum Wiedereinfüllen von Pulver zur additiven Fertigung mithilfe eines Versorgungsmoduls (2) nach einem der Ansprüche 1 bis 4 oder einer Vorrichtung nach einem der Ansprüche 5 bis 6, umfassend die folgenden Schritte:
- Einsetzen (E3) eines leeren Behälters in den Handschuhkasten (25), dann dichtes Schließen (E4) des Handschuhkastens (25),
- sobald der Behälter mit Pulver zur additiven Fertigung, das vom Einlass (211) des Versorgungsmoduls (2) aus transferiert wurde, gefüllt ist, Handhaben (E74) des Behälters derart, dass der Behälter geschlossen wird, während der Handschuhkasten (25) geschlossen ist.

8. Verfahren zum Wiedereinfüllen nach Anspruch 7 mithilfe eines Versorgungsmoduls (2) nach einem der Ansprüche 3 bis 4, umfassend einen Schritt des Förderns (E6) des Pulvers von dem Behälter (37) aus zum Einlass (211) des Versorgungsmoduls (2).

9. Verfahren zum Wiedereinfüllen von Pulver zur additiven Fertigung nach Anspruch 8 mithilfe einer Vorrichtung nach Anspruch 6, umfassend einen Schritt des Förderns (P1) des Pulvers von dem Rückgewinnungssystem (53, 55) aus zum Einlass (211) des Versorgungsmoduls (2) hin.

10. Verfahren zum Wiedereinfüllen von Pulver zur additiven Fertigung nach einem der Ansprüche 7 bis 9, umfassend einen vorbereitenden Schritt (P3) des Siebens von Pulver.

## Claims

1. Provision module (2) for providing additive manufacturing powder, comprising
- a main hopper (29) for storing additive manufacturing powder, the main hopper (29) being designed to be connected to a manufacturing module (4) configured to additively manufacture an object from the powder located in the main hopper (29),
- an inlet (211) of the provision module (2), which inlet is designed to be connected to the manufacturing module (4) and to receive powder located in the manufacturing module (4),
- a glovebox (25) designed to receive a container (28), the glovebox (25) being able to be closed in a sealed manner,
- a supply circuit configured to transfer powder located in the glovebox (25) to the main hopper (29),
**characterized in that** it also comprises
- an extraction circuit that is different from the supply circuit and is configured to transfer additive manufacturing powder from the inlet (211) of the provision module (2) to the container (28), when the container (28) is received in the glovebox (25),
the glovebox (25) comprising gloves (251) for closing the container (28) once it has been filled with powder, while the glovebox (25) is closed.

2. Provision module (2) according to Claim 1, wherein the glovebox (25) comprises a door (291) between the glovebox (25) and the main hopper (29), which door is movable between a first position in which the supply circuit is open between the glovebox (25) and the main hopper (29), and a second position in which the supply circuit is closed and the glovebox (25) is separated in a sealed manner from the main hopper (29).

3. Provision module (2) according to Claim 1 or 2, comprising a reservoir (37) connected to the main hopper (29), which reservoir is located below the main hopper (29) and comprises an outlet (371) designed to be connected to the manufacturing module (4) by a manufacturing duct (392),
- a return circuit (391) configured to redirect additive manufacturing powder located in the reservoir (37) towards the inlet (211) of the provision module (2),
- a circulation-inducing system designed to suck in powder from the outlet (371) of the reservoir (37) to the inlet (211) of the provision module (2).

4. Provision module (2) according to Claim 3, wherein the extraction circuit comprises a diverter (27, 30), the provision module (2) further comprising a bypass circuit (31) connecting the diverter (27, 30) to the reservoir (37) that is designed to transfer powder directly from the diverter (27, 30) to the reservoir (37), it being possible to configure the diverter (27, 30) in
- an extraction configuration, in which additive powder coming from the inlet (211) of the provision module (2) is redirected selectively towards the glovebox (25),
- a loopback configuration, in which additive powder coming from the inlet (211) of the provision module (2) is redirected selectively into the bypass circuit (31).

5. Additive manufacturing device (1) comprising
- a provision module (2) for providing additive manufacturing powder according to one of Claims 1 to 4, and
- a manufacturing module (4) configured to additively manufacture an object from the powder located in the main hopper (29), the main hopper (29) being connected to the manufacturing module (4) and the inlet (211) of the provision module (2) being connected to the manufacturing module (4).

6. Additive manufacturing device (1) according to Claim 5, moreover comprising a recovery system (53, 55) for recovering powder that is not consolidated when the object is being additively manufactured and for redirecting the powder recovered towards the inlet (211) of the provision module (2).

7. Method for repotting additive manufacturing powder using a provision module (2) according to one of Claims 1 to 4 or a device according to either of Claims 5 and 6, comprising the following steps:
- inserting (E3) an empty container into the glovebox (25), and then closing (E4) the glovebox (25) in a sealed manner,
- once the container has been filled with additive manufacturing powder transferred from the inlet (211) of the provision module (2), handling (E74) the container so as to close the container, while the glovebox (25) is closed.

8. Repotting method according to Claim 7 using a provision module (2) according to either of Claims 3 and 4, comprising a step of conveying (E6) powder from the reservoir (37) to the inlet (211) of the provision module (2).

9. Method for repotting additive manufacturing powder according to Claim 8 using a device according to Claim 6, comprising a step of conveying (P1) powder from the recovery system (53, 55) to the inlet (211) of the provision module (2).

10. Method for repotting additive manufacturing powder according to one of Claims 7 to 9, comprising a preliminary powder sieving step (P3).
